# EUROPÄISCHE PATENTSCHRIFT

(11) **EP 0 872 000 B1**
(45) Veröffentlichungstag und Bekanntmachung des Hinweises auf die Patenterteilung: **04.08.1999**
(21) Anmeldenummer: 96907262.8
(22) Anmeldetag: 23.03.1996
(51) Int. Cl.: H02B 1/21

(54) **SCHIENENKANALSYSTEM EINER NIEDERSPANNUNGS-SCHALTANLAGE**
BUSBAR CHANNEL SYSTEM OF A LOW-VOLTAGE SWITCH EQUIPMENT
JEU DE BARRES OMNIBUS POUR INSTALLATION DE COMMUTATION BASSE TENSION

(30) Priorität: 28.03.1995 DE 19511350
(43) Veröffentlichungstag der Anmeldung: 21.10.1998
(73) Patentinhaber: Klöckner-Moeller GmbH, 53115 Bonn (DE)
(72) Erfinder: BONA, Gerhard, D-53177 Bonn (DE); WINKLER, Johannes, D-53332 Bornheim (DE); WISSEN, Axel, D-53773 Hennef (DE)
(86) Internationale Anmeldenummer: DE9600506
(87) Internationale Veröffentlichungsnummer: WO9630980

(56) Entgegenhaltungen:
- FR-A- 1 339 926
- FR-A- 2 126 913
- FR-A- 2 460 058
- FR-A- 2 562 344
- NL-A- 8 500 146

## Beschreibung

Die Erfindung betrifft eine Niederspannungs-Schaltanlage zur Abgabe und /oder Verteilung elektrischer Energie mit in einem schrankförmigen Gehäuse angeordneten Stromsammelschienen, an die mindestens ein mit wenigstens einem auf einem herausnehmbaren Einschubelement angeordneten Schaltgerät versehener Stromabnehmer angeschlossen ist, wobei die Stromsammelschienen in einem Schienenkanalsystem angeord-nete und mittels Trägerelementen darin gehaltene Verteilschienen aufweisen, deren elektrische Verbindung zu den auf einem Einschubelement befindlichen Schaltgeräten steckbar ist, und wobei das Schienenkanalsystem einen die Verteilschienen auf drei Seiten umgebenden Schienenkanal und eine am Schienenkanal gehaltene Schottwand zur Abdeckung der Verteilschienen aufweist, in der mindestens eine Öffnung zum Durchtritt der Kontaktstücke eines Laststromsteckers vorgesehen ist.Aus der SE 84 00 475-3 ist eine Niederspannungs-Schaltanlage bekannt, bei der vertikal verlaufende Verteilschienen an darüber liegende, horizontal verlaufende Hauptsammelschienen angeschlossen sind. Die Verteilschienen werden durch Trägerelemente in einem U-förmigen Schienenkanal gehalten. Die Trägerelemente sind kammartig ausgebildet und werden in entsprechende schlüssellochartige Ausnehmungen in der Rückwand des Schienenkanals eingehängt. Die Verteilschienen werden zwischen den Fingern des kammartigen Trägerelementes gehalten und mittels Befestigungsschienen am Trägerelement festgeschraubt. Diese Befestigungsschienen werden mit einer Schraube in einem Finger des kammartigen Trägerelementes befestigt und sind so ausgebildet, daß sie einen Teil der rechts und links neben dem Finger angeordneten Verteilschienen überdecken und bündig an diesen anliegen. Zwischen zwei benachbarten Befestigungsschienen verbleibt ein Freiraum zur Aufnahme von Laststromsteckern.

Damit die vier Verteilschienen zuverlässig gehalten werden, sind fünf Befestigungsschienen erforderlich. Diese Befestigungsschienen sind aus Kunststoff hergestellt und erfüllen somit auch isolierende Funktionen. Zur Überdeckung des zwischen den Befestigungsschienen verbleibenden Freiraumes werden zwei benachbarte Befestigungsschienen mit Einrastelementen verbunden. Durch die parallele Anordnung der Befestigungsschienen zueinander und das Überbrücken der verbleibenden Freiräume mit den Einrastelementen entsteht eine isolierende Schottwand.

An seiner freien Längskante ist der Schienenkanal rechtwinklig abgewinkelt ausgebildet und weist Bohrungen zur Aufnahme von Befestigungsmitteln auf.

Dieses gesamte Schienenkanalsystem ist nahe der Rückwand des Gehäuses der Niederspannungs-Schaltanlage derart befestigt, daß vor dem Schienenkanalsystem Einschübe mit einem oder mehreren Schaltgeräten angebracht werden können. Diese Einschübe haben ein eigenes Gehäuse und weisen an ihrer Rückseite steckbare Laststromstecker auf. Diese Einschübe werden in entsprechende Haltevorrichtungen am Gehäuse der Niederspannungs-Schaltanlage so weit eingeschoben, bis die Laststromstecker mit den Verteilschienen in Kontakt stehen.

Die aus der SE 84 00 475-3 bekannte Niederspannungs-Schaltanlage setzt sich, wie oben beschrieben, aus einer Vielzahl von Einzelteilen zusammen, die montiert werden müssen. Eine Vormontage ist insbesondere deshalb nicht möglich, weil die Verteilschienen über die Trägerelemente in die Rückwand des Schienenkanals lose eingehängt sind, ohne dort fixiert zu werden. Diese Konstruktion schließt einen Transport eines vorgefertigten Schienenkanalsystems von einem Arbeitsplatz zum Anderen von vornherein aus, denn dadurch, daß die Trägerelemente mit ihren T-förmigen Haltestiften nur lose in entsprechende schlüssellochähnliche Öffnungen in der Rückwand des Schienenkanals eingehängt sind, besteht beim Transport die Gefahr, daß die Verteilschienen mit ihren Trägerelementen aus dieser Halterung herausgerasten, insbesondere wenn das Schienenkanalsystem liegend transportiert wird.

Darüber hinaus ist die Montage der Einzelteile am vorbereiteten Schaltschrank mühsam, weil die Montage in vertikaler Lage des Schaltschrankes erfolgt, so daß der Monteur für jedes zu montierende Bauteil andere, in der Regel den Körper belastende Arbeitshöhen vorfindet. Außerdem ist eine derartige Montage aufwendig, weil die verschiedenen Einzelteile mühsam zum Montageplatz gebracht werden müssen.

Davon ausgehend liegt der vorliegenden Erfindung die Aufgabe zugrunde, eine Niederspannungs-Schaltanlage zu schaffen, die kostengünstig herzustellen ist und die die Arbeitsbelastung des Monteurs verringert.

Als Lösung dieser Aufgabe wird vorgeschlagen, die Niederspannungs-Schaltanlage der eingangs genannten Art dahingehend weiterzubilden, daß der Schienenkanal, die Schottwand und die dazwischen angeordneten, die Verteilschienen tragenden Trägerelemente miteinander fluchtende Bohrungen aufweisen, so daß das Schienenkanalsystem mittels einer Anzahl durch den Schienenkanal, die Schottwand und die Trägerelemente durchsteckbarer Befestigungsmittel zusammengehalten ist.

Eine nach dieser technischen Lehre ausgeführte Niederspannungs-Schaltanlage hat den Vorteil, daß alle Einzelteile, insbesondere der Schienenkanal, die Trägerelemente, die Verteilschienen und die Schottwand durch die Befestigungsmittel fest und unverlierbar aneinander fixiert sind. Dies ermöglicht den Transport des vorgefertigten Schienenkanalsystems von einem Ort zum anderen, ohne Gefahr laufen zu müssen, daß sich einzelne Teile des Schienenkanalsystems beim Transport wieder lösen. Somit ist es möglich, daß erfindungsgemäße Schienenkanalsystem der Niederspannungs-Schaltanlage bereits vorzumontieren und im fertig montierten Zustand zum Aufstellplatz beim Kunden zu transportieren. Damit wird eine erhebliche Kostenersparnis erzielt, weil der mühsame Transport der Einzelteile an den Montageplatz reduziert wird auf den Transport des fertigen Schienenkanalsystems. Desweiteren wird die Montagezeit deutlich reduziert, was ebenfalls zu einer Senkung der Montagekosten beiträgt.

Ein weiterer Vorteil des erfindungsgemäßen Schienenkanalsystems liegt darin, daß dieses nun in horizontaler Lage montiert werden kann, da es nicht erforderlich ist, das Schienenkanalsystem in der vertikal angeordneten Niederspannungs-Schaltanlage zu montieren.

Die horizontale bzw. liegende Montage erlaubt es dem Monteur eine Arbeitshöhe zu wählen, die seiner Physiologie entspricht, so daß hierdurch eine deutliche Arbeitserleichterung erzielt wird.

Ein weiterer Vorteil der liegenden Montage besteht darin, daß die Einzelteile schicht- bzw. sandwichartig aufeinander gelegt werden können. Dies bedeutet, daß die Einzelteile quasi schichtartig aufeinandergelegt bzw. zusammengesteckt werden und daß das Befestigungsmittel erst angebracht wird, nachdem sämtliche Teile zusammengesteckt sind. Einzelheiten zum Montageverfahren sind weiter unten ausführlich beschrieben.

Als weitere Lösung der obengenannten Aufgabe wird vorgeschlagen, eine Niederspannungs-Schaltanlage der eingangs genannten Art dahingehend weiterzubilden, daß sich an den Schienenkanal Halteelemente anschließen, die Mittel zur Aufnahme der Einschubelemente aufweisen.

Eine nach dieser technischen Lehre ausgeführte Niederspannungs-Schaltanlage hat den Vorteil, daß neben dem Schienenkanalsystem auch die Halteelemente für die Einschubelemente sowie die Einschubelemente selbst bereits vormontiert werden können und daß diese Montage liegend erfolgen kann. Somit treten die obengenannten Vorteile auch für diese Lösung der obengenannten Aufgabe ein.

Ein weiterer Vorteil dieser technischen Lehre besteht darin, daß durch die Anordnung der Halteelemente am Schienenkanalsystem die Konstruktion und der Aufbau des Gehäuses der Niederspannungs-Schaltanlage deutlich vereinfacht wird. Durch die Anbringung der Einschübe direkt am Schienenkanalsystem entfallen die ansonsten erforderlichen Zwischenträger und Befestigungsvorrichtungen am Gehäuse. Dies führt zu einer deutlichen Verringerung der Anzahl der Bauteile der Niederspannungs-Schaltanlage und somit zur Kostensenkung. Durch ein deutlich verein-fachtes Gehäuse ist auch die Montage desselben am Aufbauplatz der Niederspannungs-Schaltanlage einfacher und schneller durchzuführen, was wiederum zur Kostensenkung beiträgt.

In bevorzugten Ausführungsformen ist der Schienenkanal im Querschnitt U-, C- oder wannenförmig ausgebildet und weist eine Rückwand und zwei sich im wesentlichen gegenüberliegende Seitenwände auf. Durch eine derartige Ausgestaltung wird gewährleistet, daß der Schienenkanal die Verteilschienen auf drei Seiten umschließt. Der Übergang zwischen den Seitenwänden und der Rückwand kann fließend sein, wie zum Beispiel bei der im Querschnitt C-förmigen Ausführungsform.

Zur weiteren Reduzierung der zu montierenden Einzelteile ist es vorteilhaft, eine Seitenwand des Schienenkanals und ein sich daran anschließendes Halteelement als ein einziges Bauteil auszuführen. Dadurch werden sowohl die Herstellungs- als auch die Montagekosten gesenkt.

In einer besonders bevorzugten Ausführungsform weist der Schienenkanal, bzw. dessen Seitenwand oder gegebenenfalls auch das sich an die Seitenwand anschließende Halteelement, eine nahezu rechtwinklig abgebogene Anschlußleiste auf. In dieser Anschlußleiste befinden sich vorzugsweise vorbereitete Bohrungen zur Aufnahme von Befestigungsmitteln. Dies hat den Vorteil, daß an die Anschlußleiste in einfacher Weise weitere Bauteile montiert werden können oder daß das Schienenkanalsystem über die Anschlußleiste direkt oder indirekt am Gehäuse der Niederspannungs-Schaltanlage befestigt werden kann.

In einer weiteren, besonders bevorzugten Ausführungsform sind der Schienenkanal und die beiden, sich daran anschließenden Halteelemente einstückig ausgeführt. Insbesondere sind der Schienenkanal, die Halteelemente und die Anschlußleisten aus einem entsprechend gebogenen Blech hergestellt, welches verzinkt ist.

Dies hat den Vorteil, daß die Zahl der einzelnen Bauteile noch einmal deutlich verringert wird und daß die Herstellung und die Montage dieses Schienenkanals (mit Halteelement und Anschlußleiste) sehr kostengünstig und effektiv erfolgt.

In einer weiteren Ausführungsform ist die Schottwand ebenfalls einstückig und aus Metall, vorzugsweise aus verzinktem Blech hergestellt, so daß die zuvor genannten Vorteile auch hier eintreten.

In einer anderen, bevorzugten Ausführungsform weist das Halteelement Führungsansätze zur Aufnahme einer Führungskante des Einschubelementes auf, wobei für jedes Einschubelement auf jedem Halteelement wenigstens zwei übereinander angeordnete Führungsansätze vorgesehen sind. In einer vorteilhaften Ausgestaltung sind für jede Führungskante drei Führungsansätze vorgesehen, wobei jeweils übereinander befindliche Führungsansätze versetzt angeordnet sind.

Die Führungsansätze sind aus dem Halteelement herausgelöste, im Grundriß dreieckige Vorsprünge. Durch Ausschneiden oder Ausstanzen zweier rechtwinklig zueinander angeordneter Längsschlitze und nachfolgendes Herausbiegen entsteht ein dreieckiger Führungsansatz.

Diese Führungsansätze erleichtern den Ein- bzw. Ausbau der die Schaltgeräte tragenden Einschubelemente. Dabei weisen die Einschubelemente rechts und links Führungskanten auf. Beim Einbau eines derartigen Einschubelementes wird der vordere Abschnitt der Führungskante zunächst auf den vorderen Führungsansatz aufgesetzt und das Einschubelement dann horizontal ausgerichtet, bevor das Einschubelement so weit zwischen die Halteelemente geschoben wird, bis die am Einschubelement befindlichen Laststromstecker mit den Verbindungsschienen und mit der Erdungsschiene in Kontakt stehen.

Durch die Führungsansätze wird eine einfache Montage und ein schnelles und präzises Ausrichten der Einschubelemente möglich.

In einer weiteren, besonders bevorzugten Ausführungsform werden die Verteilschienen durch die Trägerelemente derart gehalten, daß die Verteilschienen sowohl von dem Schienenkanal als auch von der Schottwand beabstandet sind.

Dies hat den Vorteil, daß hierdurch die Kurzschlußsicherheit der Niederspannungs-Schaltanlage gewährleistet ist und daß es nicht länger erforderlich ist, die Schottwand aus einem isolierenden Kunststoff herzustellen. Vielmehr ist es hierdurch auch möglich, die Schottwand aus billigeren Materialien, insbesondere aus verzinktem Blech, herzustellen.

Die zuvor genannte Anordnung der Verteilschienen wird insbesondere dadurch erreicht, daß zwei verschiedene Trägerelemente die Verteilschienen zwischen sich aufnehmen. Dabei können die verschiedenen Trägerelemente durchaus baugleich sein. Durch diese Ausgestaltung wird die obengenannte Schicht- bzw. Sandwichbauweise unterstützt, denn hierdurch wird es möglich, zunächst ein Trägerelement in die Rückwand des Schienenkanals einzusetzen, dann die Verteilschiene in dieses Trägerelement einzulegen, bevor das zweite Trägerelement zur Stabilisierung der Verteilschienen oben aufgelegt wird. Abschließend wird die Schottwand in den Schienenkanal eingelegt und dann das Befestigungsmittel, vorzugsweise eine Durchgangsschraube, durch sämtliche Bauteile hindurchgesteckt und auf der gegenüberliegenden Seite mittels einer Mutter fixiert.

Hierbei ist es vorteilhaft, für jedes Paar von Trägerelementen mindestens eine, vorzugsweise jedoch zwei, durchsteckbare Befestigungsmittel vorzusehen.

Als Befestigungsmittel werden vorzugsweise Schrauben, Nieten, Schnappverschlüsse oder dergleichen eingesetzt.

In einer weiteren, vorteilhaften Ausführungsform ist an der Vorderseite der Schottwand eine, insbesondere L-förmige, PE-Schiene angebracht, in die ein am Einschubelement montierter PE-Stecker eingreift.

In einer vorteilhaften Ausführungsform sind an der Rückwand des Schienenkanalsystems mindestens zwei, vorzugsweise jedoch drei Querträger befestigt, mittels denen das Schienenkanalsystem am Rahmen des Gehäuses der Niederspannungs-Schaltanlage verschraubt wird.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Die Erfindung ist in der Zeichnung dargestellt und wird anhand von Ausführungsbeispielen näher beschrieben. Im folgenden werden die einzelnen Figuren der Zeichnung kurz erläutert:
- Fig. 1: zeigt eine perspektivische Darstellung einer Niederspannungs-Schaltanlage mit einem erfindungsgemäßen Schienenkanalsystem;
- Fig. 2: zeigt eine perspektivische Explosionsdarstellung von Einzelteilen des erfindungsgemäßen Schienenkanalsystems der Niederspannungs-Schaltanlage;
- Fig. 3: zeigt eine perspektivische Darstellung des Schienenkanalsystems gemäß Fig. 2, in montiertem Zustand;
- Fig. 4: zeigt in vergrößerter, perspektivischer Darstellung einen Ausschnitt eines Halteelementes mit Führungsansätze gemäß Linie IV-IV in Fig. 3;
- Fig. 5: zeigt eine perspektivische Explosionsdarstellung der Einzelteile eines Einschubelementes der Niederspannungs-Schaltanlage.

Die einzelnen Figuren der Zeichnung zeigen den erfindungsgemäßen Gegenstand teilweise stark schematisiert und sind nicht maßstäblich zu verstehen. Insbesondere sind einzelne, in den Figuren dargestellte Gegenstände teilweise überproportional vergrößert abgebildet, damit ihr Aufbau besser gezeigt werden kann.

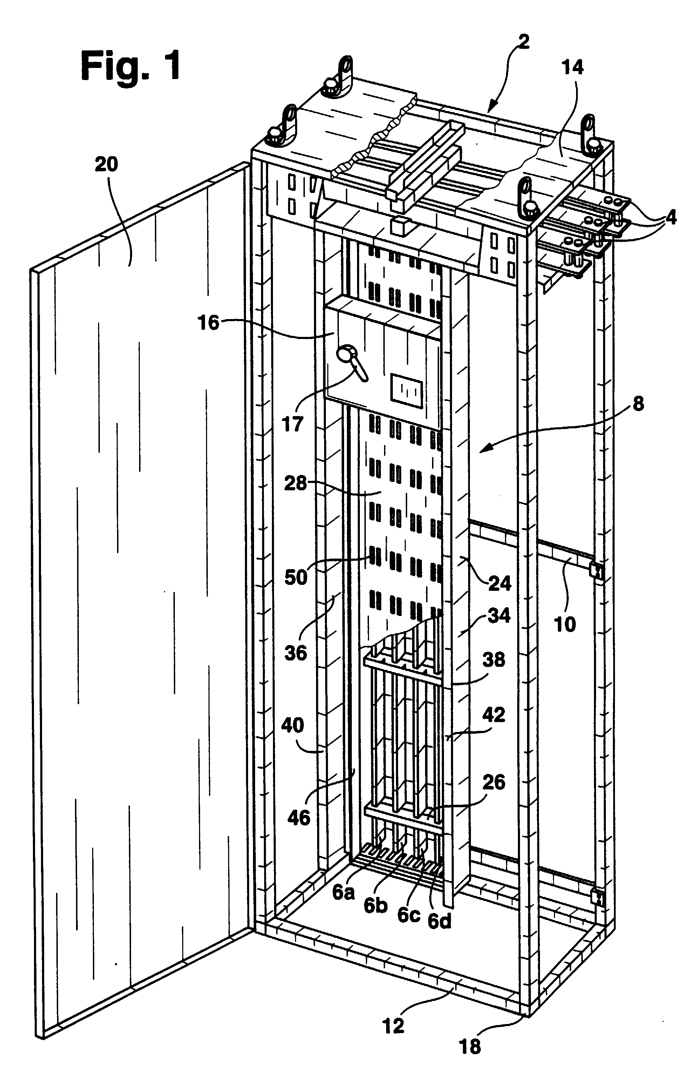

**Fig. 1** zeigt eine Ausführungsform einer Niederspannungs-Schaltanlage **2** mit oben angeordneten, horizontal verlaufenden Hauptsammelschienen **4**, an die vertikal verlaufende Feldsammel- oder Verteilschienen **6a - 6d** angeschlossen sind. Die Verteilschienen **6a - 6d** sind in einem Schienenkanalsystem **8** untergebracht, welches über drei Querträger **10** an einem Rahmen **12** eines Gehäuses **14** der Niederspannungs-Schaltanlage **2** befestigt ist.

An das Schienenkanalsystem **8** sind mehrere Einschubelemente **16** mit Schaltgeräten **17** angebracht, die jeder mit einem nicht dargestellten Stromabnehmer verbunden sind.

Das Gehäuse **14** der Niederspannungs-Schaltanlage **2** umfaßt einen Rahmen **12** mit Hohlprofilen, die an ihren Eckverbindungen **18** steckbar sind und nach erfolgter Montage dort mittels nicht dargestellter Befestigungsmittel zusammengehalten sind. An den Rahmen **12** ist eine Schranktür **20** drehbeweglich montiert, die das Gehäuse **14** verschließt. Die anderen Seiten des Gehäuses **14** werden durch lösbar am Rahmen **12** befestigte, jedoch nicht dargestellte Verkleidungen bedeckt.

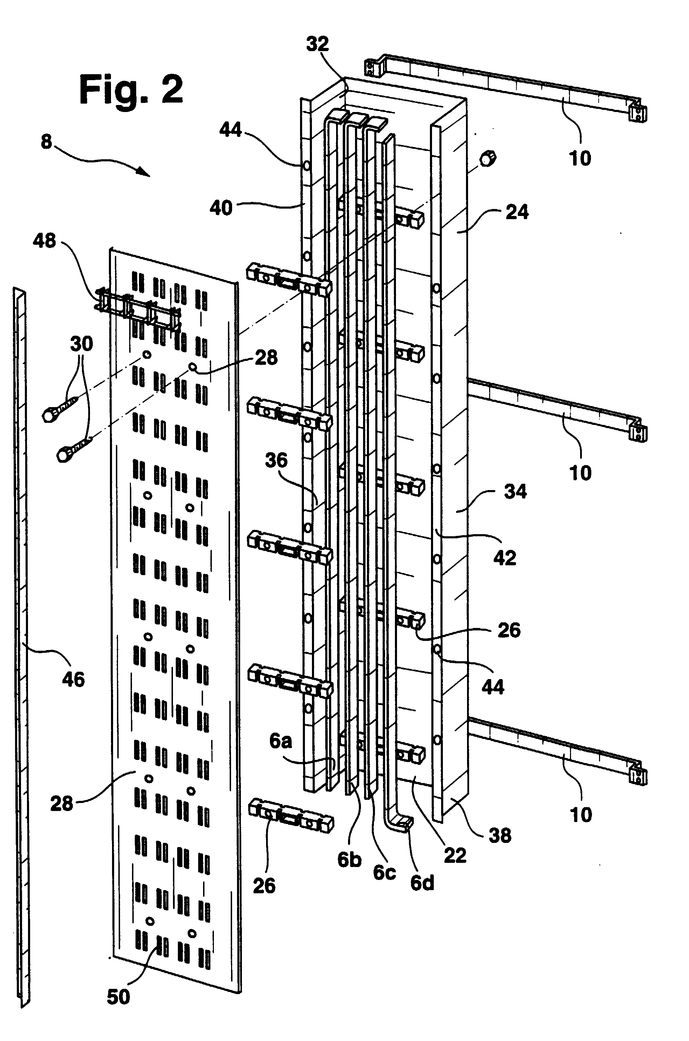

**Fig. 2** zeigt Einzelteile des Schienenkanalsystems **8** in perspektivisch-, explosionsartiger Darstellung. Das Schienenkanalsystem **8** umfaßt drei an einer Rückwand **22** eines Schienenkanals **24** befestigte Querträger **10**, sowie die Verteilschienen **6a - 6d** tragende Trägerelemente **26**, eine Schottwand **28** und durch das Schienenkanalsystem **8** hindurchsteckbare Befestigungsschrauben **30**.

Die Montage des Schienenkanalsystems **8** erfolgt liegend, das heißt die Einzelteile sind während der Montage in Richtung ihrer Längsachse horizontal ausgerichtet.

Zur Montage werden die Querträger **10** in eine vorgefertigte, nicht dargestellte Negativform gelegt um sicherzustellen, daß die Anordnung der Querträger **10** mit entsprechenden Befestigungsbohrungen bzw. Befestigungsvorrichtungen am Rahmen **12** des Gehäuses **14** kompatibel sind. Dabei kann die Negativform auf eine für den Monteur angenehme Arbeitshöhe gebracht werden. Auf die derart ausgerichteten Querträger **10** wird der Schienenkanal **24** aufgesetzt und mit den Querträgern **10** verschraubt.

Der Schienenkanal **24** umfaßt neben der Rückwand **22** zwei sich im wesentlichen gegenüberliegende Seitenwände **32**, **34**, an die sich übergangslos Halteelemente **36**, **38** zur Aufnahme der die Schaltgeräte **17** tragenden Einschubelemente **16** anschließen. Die Halteelemente **36**, **38** sind an ihrer freien Längskante rechtwinklig abgewinkelt und bilden so Anschlußleisten **40**, **42** aus. Die Anschlußleisten **40**, **42** weisen mehrere, gleichmäßig beabstandete Bohrungen **44** zur Aufnahme von Befestigungsmitteln auf. Der Schienenkanal **24**, die Halteelemente **36**, **38** und die Anschlußleisten **40**, **42** sind aus einem einzigen, verzinkten Blech geformt, wobei der Schienenkanal **24** eine im Querschnitt U-förmige Form aufweist.

Nachdem der Schienenkanal **24** an den Querträgern **10** befestigt ist, werden erste Trägerelemente **26** in regelmäßigen Abständen in die Rückwand **22** des Schienenkanals **24** eingesetzt. Dabei werden an der Hinterseite des Trägerelementes **26** befindliche Vorsprünge in entsprechende Ausnehmungen in der Rückwand **22** eingeführt, um das Trägerelement **26** lagestabil zu halten.

In die derart vormontierten Trägerelemente **26** werden dann die vier Verteilschienen **6a - 6d** eingesetzt. Dabei sind die Trägerelemente **26** so ausgebildet, daß die vier Verteilschienen **6a - 6d** zueinander parallel und senkrecht zur Rückwand **22** gehalten werden. Die Verteilschienen **6a - 6d** sind dabei in entsprechende Ausnehmungen in den Trägerelementen **26** eingesetzt und ragen zu einem bestimmten Anteil aus dem Trägerelement **26** heraus. Auf die so vormontierten Verteilschienen **6a - 6d** werden zweite Trägerelemente **26**, die mit den ersten Trägerelementen baugleich sind, aufgesetzt. Dabei greifen an den Trägerelementen befindliche Vorsprünge in entsprechende Ausnehmungen am jeweils anderen Trägerelement **26** ein und fixieren so sowohl die Trägerelemente **26** als auch die Verteilschienen **6a - 6d** in der ordnungsgemäßen Position.

Anschließend wird die einstückige, aus verzinktem Blech hergestellte Schottwand **28** auf die zweiten Trägerelemente **26** derart aufgelegt, daß die an den Trägerelementen **26** befindlichen Vorsprünge in entsprechende Ausnehmungen in der Schottwand **26** eingreifen.

Aufgrund der an den Trägerelementen **26** befindlichen Vorsprünge sind sämtliche Einzelteile ordnungsgemäß zueinander positioniert und die in den Trägerelementen **26**, in der Rückwand **22** und in der Schottwand **28** vorgesehenen Bohrungen zur Aufnahme der durchsteckbaren Befestigungsschrauben **30** fluchten miteinander, so daß das Durchstecken der Befestigungsschraube **30** nun problemlos durchgeführt werden kann. Nachdem die Befestigungsschraube **30** durchgesteckt ist, wird eine Mutter aufgeschraubt und somit das Schienenkanalsystem **8** dauerhaft und verliersicher montiert.

Bei Bedarf kann die Schottwand **28** zusätzlich noch mit der jeweiligen Seitenwand **32**, **34** verschraubt werden, um die Stabilität des Schienenkanalsystem **8** weiter zu erhöhen.

Abschließend wird auf der Vorderseite der Schottwand **28** eine im Querschnitt L-förmige PE-Schiene **46** aufgeschraubt und Steckhilfen **48** werden in entsprechende Öffnungen **50** der Schottwand **28** eingesteckt.

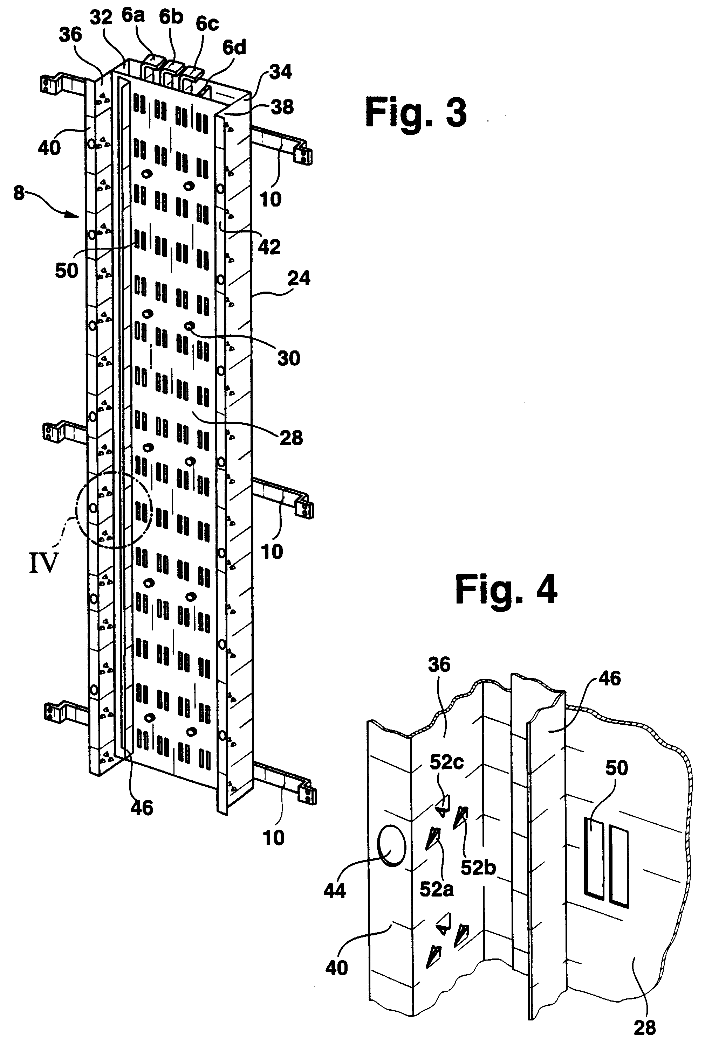

**Fig. 3** zeigt eine perspektivische Ansicht eines fertig montierten, kompletten Schienenkanalsystems **8**. In diesem Schienenkanalsystem **8** sind die Verteilschienen **6a - 6d** sowohl von dem Schienenkanal **24** als auch von der Schottwand **28** beabstandet, so daß eine Ausführung dieser Bauteile in Isoliermaterial obsolet ist.

**Fig. 4** zeigt einen Ausschnitt des Halteelementes **36** mit Führungs-ansätzen **52a - 52c** in vergrößerter Ansicht. Die Führungsansätze **52a - 52c** sind aus dem Halteelement **36**, **38** herausgebogene Blechteile und dienen der Aufnahme und Führung eines Einschubelementes **16**. Die Führungsansätze **52a - 52c** werden durch Einschneiden oder Ausstanzen zweier rechtwinklig zueinander angeordneter Schlitze und Herausbiegen des so entstandenen, dreieckigen Blechteiles erzeugt. Dabei ist die Hypothenuse des Dreiecks in der Regel horizontal anzusiedeln. In der in der Zeichnung dargestellten Ausführungsform bilden jeweils drei Führungsansätze **52a - 52c** die Aufnahme für das Einschubelement **16** in einem Halteelement **36**, **38**. Dabei sind die Führungsansätze **52a** und **52b** unterhalb des Führungsansatzes **52c** und versetzt von diesem angeordnet.

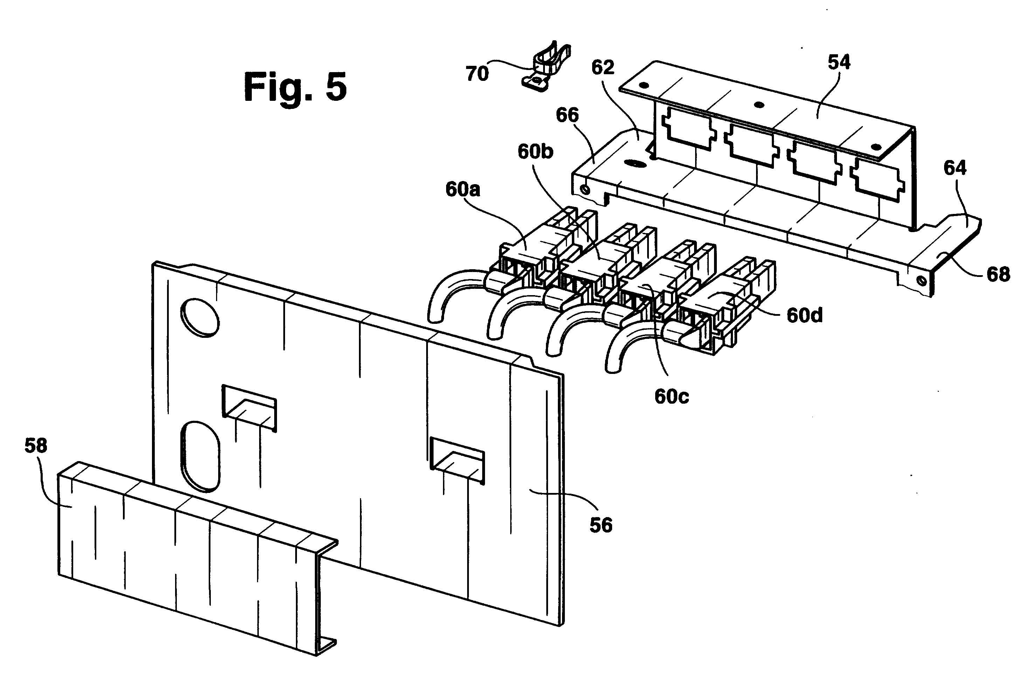

**Fig. 5** zeigt Einzelteile des Einschubelementes **16** in perspektivisch-, explosionsartiger Darstellung, jedoch ohne ein Schaltgerät **17**. Das Einschubelement **16** umfaßt eine Steckeraufnahme **54**, eine Geräteplatte **56**, eine Aufbauplatte **58** und vier Laststromstecker **60a - 60d**, wobei die Laststromstecker **60a - 60c** auf die stromführenden Verteilschienen **6a - 6c** und der Laststromstecker **60d** auf den Nulleiter **6d** gesteckt werden. Die Steckeraufnahme **54** weist zwei Einführschienen **62**, **64** mit daran ausgebildeten Führungskanten **66**, **68** auf, die in die Führungsansätze **52a - 52c** eingeschoben werden, um das Einschubelement **16** an den Halteelementen **36**, **38** zu halten. Außerdem ist an der Einführschiene **62** ein PE-Stecker **70** angeschraubt.

An dieses Einschubelement **16** wird an der Aufbauplatte **58** wenigstens ein Schaltgerät **17**, insbesondere ein Leistungsschalter, ein Motorschutzschalter, ein Schütz oder dergleichen angebracht. Dieses so vormontierte Einschubelement **16** kann dann in die in **Fig. 1** dargestellte Niederspannungs-Schaltanlage **2** einfach und problemlos eingeschoben werden. Dabei wird das Einschubelement **16** zunächst mit dem vorderen Bereich ihrer Führungskanten **66**, **68** auf entsprechende Führungsansätze **52a** aufgesetzt, anschließend horizontal ausgerichtet und schließlich in Richtung Verteilschienen **6a - 6d** eingeschoben. Beim Einschieben werden die Laststromstecker **60a - 60d** durch entsprechende Öffnungen **50** in der Schottwand **28** hindurchgeschoben, bevor sie auf die Verteilschienen **6a - 6d** aufgesteckt werden. Um das Hindurchschieben der Laststromstecker **60a - 60d** durch die Schottwand **28** zu erleichtern, sind die Öffnungen **50** mit Steckhilfen **48** ausgestattet.

Diese Steckhilfen **48** sind nach vorne hin schmal ausgebildet und verbreitern sich in Richtung der Verteilschienen **6a - 6d**, so daß die Laststromstecker **60a - 60d** stufenlos bis auf die Verteilschienen **6a - 6d** geleitet werden.

Die Öffnungen **50** der Schottwand **28** sind entsprechend der Sicherheitsnorm IP 20 fingersicher ausgelegt, auch wenn die Steckhilfe **48** nicht auf die Öffnung **50** aufgesteckt ist.

Zur Vermeidung von Unfällen und/oder gefährlichen Situationen ist die gesamte Niederspannungs-Schaltanlage auf eine Kurzschlußfestigkeit von 75 kA_{eff} ausgelegt.

## Patentansprüche

1. Niederspannungs-Schaltanlage zur Abgabe und/oder Verteilung elektrischer Energie mit in einem schrankförmigen Gehäuse (14) angeordneten Stromsammelschienen, an die mindestens ein mit wenigstens einem auf einem herausnehmbaren Einschubelement (16) angeordneten Schaltgerät (17) versehener Stromabnehmer angeschlossen ist, wobei die Stromsammelschienen in einem Schienenkanalsystem (8) angeordnete und mittels Trägerelementen (26) darin gehaltene Verteilschienen (6a - 6d) aufweisen, deren elektrische Verbindung zu den auf einem Einschubelement (16) befindlichen Schaltgeräten (17) steckbar ist, und wobei das Schienenkanalsystem (8) einen die Verteilschienen (6a - 6d) auf drei Seiten umgebenden Schienenkanal (24) und eine am Schienenkanal (24) gehaltene Schottwand (28) zur Abdeckung der Verteilschienen (6a - 6d) aufweist, in der mindestens eine Öffnung (50) zum Durchtritt der Kontaktstücke eines Laststromsteckers vorgesehen ist, **dadurch gekennzeichnet**, daß der Schienenkanal (24), die Schottwand (28) und die dazwischen angeordneten, die Verteilschienen (6a - 6d) tragenden Trägerelemente (26) miteinander fluchtende Bohrungen aufweisen, so daß das Schienenkanalsystem (8) mittels einer Anzahl durch den Schienenkanal (24), die Schottwand (28) und die Trägerelemente (26) durchsteckbarer Befestigungsmittel (30) zusammengehalten ist.

2. Niederspannungs-Schaltanlage nach Anspruch 1, **dadurch gekennzeichnet**, daß sich an den Schienenkanal (24) Halteelemente (36, 38) anschließen, die Mittel zur Aufnahme der Einschubelemente (16) aufweisen.

3. Niederspannungs-Schaltanlage nach wenigstens einem der vorhergehenden Ansprüche, dadurch gekennzeichnet, daß der Schienenkanal (24) im Querschnitt U-, C- oder wannenförmig ausgebildet ist, wobei der Schienenkanal (24) eine Rückwand (22) und zwei sich im wesentlichen gegenüberliegende Seitenwände (32, 34) aufweist.

4. Niederspannungs-Schaltanlage nach wenigstens einem der vorhergehenden Ansprüche, dadurch gekennzeichnet, daß zumindest eine Seitenwand (32, 34) des Schienenkanals (24) und ein Halteelement (36, 38) als ein Bauteil ausgeführt sind.

5. Niederspannungs-Schaltanlage nach wenigstens einem der vorhergehenden Ansprüche, dadurch gekennzeichnet, daß der Schienenkanal (24) und/oder das Halteelement (36, 38) an wenigstens einer freien Längskante eine nahezu rechtwinkelig abgebogene Anschlußleiste (40, 42) aufweist.

6. Niederspannungs-Schaltanlage nach Anspruch 5, dadurch gekennzeichnet, daß die Anschlußleiste (40, 42) vorbereitete Bohrungen (44) zur Aufnahme von Befestigungsmitteln aufweist.

7. Niederspannungs-Schaltanlage nach wenigstens einem der vorhergehenden Ansprüche, dadurch gekennzeichnet, daß der Schienenkanal (24) und die Halteelemente (36, 38) aus einem einzigen Bauteil hergestellt ist.

8. Niederspannungs-Schaltanlage nach wenigstens einem der vorhergehenden Ansprüche, dadurch gekennzeichnet, daß die Schottwand (28) einstückig ausgeführt ist.

9. Niederspannungs-Schaltanlage nach wenigstens einem der vorhergehenden Ansprüche, dadurch gekennzeichnet, daß die Schottwand und/oder der Schienenkanal (24) und/oder die Halteelemente (36, 38) aus Metall hergestellt ist.

10. Niederspannungs-Schaltanlage nach Anspruch 9, dadurch gekennzeichnet, daß der Schienenkanal (24) und die Halteelemente (36, 38) aus einem einzigen entsprechend gebogenen Blech hergestellt sind.

11. Niederspannungs-Schaltanlage nach wenigstens einem der Ansprüche 9 bis 10, dadurch gekennzeichnet, daß der Schienenkanal (24) und/oder die Halteelemente (36, 38) und/oder die Schottwand (28) verzinkt ausgeführt sind.

12. Niederspannungs-Schaltanlage nach wenigstens einem der vorhergehenden Ansprüche, dadurch gekennzeichnet, daß das Halteelement (36, 38) für jedes Einschubelement (16) wenigstens zwei übereinander angeordnete Führungsansätze (52a - 52c) zur Aufnahme einer Führungskante (66, 68) des Einschubelementes (16) aufweist.

13. Niederspannungs-Schaltanlage nach Anspruch 12, dadurch gekennzeichnet, daß jeweils übereinander befindliche Führungsansätze (52a - 52c) zur Aufnahme einer Führungskante (66, 68) des Einschubelementes (16) versetzt angeordnet sind.

14. Niederspannungs-Schaltanlage nach wenigstens einem der Ansprüche 12 und 13, dadurch gekennzeichnet, daß der Führungsansatz (52a - 52c) aus dem Halteelement (36, 38) durch teilweises freistanzen und anschließendes vorbiegen gebildet ist.

15. Niederspannungs-Schaltanlage nach wenigstens einem der Ansprüche 12 bis 14, dadurch gekennzeichnet, daß der Führungsansatz (52a - 52c) eine dreieckige Grundfläche aufweist.

16. Niederspannungs-Schaltanlage nach wenigstens einem der vorhergehenden Ansprüche, dadurch gekennzeichnet, daß die Trägerelemente (26) die Verteilschienen (6a - 6d) sowohl von dem Schienenkanal (24) als auch von der Schottwand (28) beabstandet halten.

17. Niederspannungs-Schaltanlage nach wenigstens einem der vorhergehenden Ansprüche, dadurch gekennzeichnet, daß jeweils zwei Trägerelemente (26) die Verteilschienen (6a - 6d) zwischen sich aufnehmen.

18. Niederspannungs-Schaltanlage nach Anspruch 17, dadurch gekennzeichnet, daß die zwei, die Verteilschienen (6a - 6d) tragenden Trägerelemente (26) baugleich sind.

19. Niederspannungs-Schaltanlage nach wenigstens einem der vorhergehenden Ansprüche, dadurch gekennzeichnet, daß das Schienenkanalsystem (8) durch ein oder zwei durchsteckbare Befestigungsmittel (30) je die Verteilschienen (6a - 6d) tragendes Trägerelement (26) bzw. je die Verteilschienen (6a - 6d) tragendes Paar von Trägerelementen (26) gehalten ist.

20. Niederspannungs-Schaltanlage nach wenigstens einem der vorhergehenden Ansprüche, dadurch gekennzeichnet, daß als Befestigungsmittel (30) Schrauben, Nieten, Schnappverschlüsse oder dergleichen einsetzbar sind.

21. Niederspannungs-Schaltanlage nach wenigstens einem der vorhergehenden Ansprüche, dadurch gekennzeichnet, daß an einer Vorderseite der Schottwand (28) eine PE-Schiene (46) angebracht ist.

22. Niederspannungs-Schaltanlage nach Anspruch 21, dadurch gekennzeichnet, daß die PE-Schiene (46) L-förmig ausgebildet ist.

23. Niederspannungs-Schaltanlage nach wenigstens einem der vorhergehenden Ansprüche, dadurch gekennzeichnet, daß das Schienenkanalsystem (8) durch mindestens zwei Querträger (10) am Gehäuse (14) befestigt ist.

## Claims

1. Low-voltage switchgear assembly for the delivery and/or distribution of electrical energy with collecting bus bars arranged in a cabinet-shaped casing (14), and connected to at least one current consumer provided with at least one switching device (17) located on a removable slide-in element (16), while the collecting bus bars present distribution bus bars (6a - 6d) which are located in a bar channel system (8) and held in the latter by means of supporting elements (26), and which have a pluggable electrical connection to the switching devices (17) devices located on a slide-in element (16), and while the bar channel system (8) presents a bar channel (24) surrounding the distribution bus bars (6a - 6d) on three sides, and a bulkhead wall (28) which is held at the bar channel (24) for covering the distribution bus bars (6a - 6d), and which provides at least one opening (50) for the passage of the contact pieces of a load current connector, **characterized in that** the bar channel (24), the bulkhead wall (28), and the supporting elements (26), which are located between them and hold the distribution bus bars (6a - 6d), present boreholes that are in alignment with one another, so that the bus bar channel system (8) is held together by means of a series of insertable fixing means (30) which may be inserted across the bar channel (24), the bulkhead wall (28), and the supporting elements (26).

2. Low-voltage switchgear assembly as claimed in claim 1, **characterized in that** the holding elements (36, 38) are located adjoining to the bar channel (24), and that they present means for receiving the slide-in elements (16).

3. Low-voltage switchgear assembly as claimed in at least one of the above-mentioned claims, **characterized in that** the bar channel (24) has a U-shaped, C-shaped, or a trough-shaped cross-section, while the bar channel (24) presents a rear wall (22) and two lateral walls (32, 34) that essentially face one another.

4. Low-voltage switchgear assembly as claimed in at least one of the above-mentioned claims, **characterized in that** the at least one lateral wall (32, 34) of the bar channel (24), and one holding element (36, 38) are built as a single component.

5. Low-voltage switchgear assembly as claimed in at least one of the above-mentioned claims, **characterized in that** at least one of the free longitudinal edges of the bar channel (24) and/or the holding element (36, 38) present a connecting strip (40, 42) that is bent almost at a right angle.

6. Low-voltage switchgear assembly as claimed claim 5, **characterized in that** the connecting strip (40, 42) has prepared boreholes (44) to receive fixing means.

7. Low-voltage switchgear assembly as claimed in at least one of the above-mentioned claims, **characterized in that** the bar channel (24) and the holding elements (36, 38) are made of a single component.

8. Low-voltage switchgear assembly as claimed in at least one of the above-mentioned claims, **characterized in that** the bulkhead wall (28) is formed as a single piece.

9. Low-voltage switchgear assembly as claimed in at least one of the above-mentioned claims, **characterized in that** the bulkhead wall and/or the bar channel (24) and/or the holding elements (36, 38) are made of metal.

10. Low-voltage switchgear assembly as claimed in claim 9, **characterized in that** the bar channel (24) and the holding elements (36, 38) are made of a single metal sheet that has been bent accordingly.

11. Low-voltage switchgear assembly as claimed in at least one of the claims 9 and 10, **characterized in that** the bar channel (24) and/or the holding elements (36, 38) and/or the bulkhead wall (28) are galvanized.

12. Low-voltage switchgear assembly as claimed in at least one of the above-mentioned claims, **characterized in that** the holding element (36, 38) for every slide-in element (16) presents at least two guiding projections (52a - 52c) located one above the other for receiving a guiding edge (66, 68) of the slide-in element (16).

13. Low-voltage switchgear assembly as claimed in claim 12, **characterized in that** the guiding projections (52a - 52c), which are located each one above the other for receiving a guiding edge (66, 68) of the slide-in element (16), are offset.

14. Low-voltage switchgear assembly as claimed at least in one of the claims 12 and 13, **characterized in that** the guiding projection (52a - 52c) has been formed out of the holding element (36, 38) by partly punching this part out and subsequently bending it toward the outside.

15. Low-voltage switchgear assembly as claimed at least in one of the claims 12 through 14, **characterized in that** the guiding projection (52a - 52c) presents a triangular base area.

16. Low-voltage switchgear assembly as claimed in at least one of the above-mentioned claims, **characterized in that** the supporting elements (26) keep the distribution bus bars (6a - 6d) at a distance both with regard to the bar channel (24), and to the bulkhead wall (28).

17. Low-voltage switchgear assembly as claimed in at least one of the above-mentioned claims, **characterized in that** two supporting elements (26) each receive the distribution bus bars (6a - 6d) between them.

18. Low-voltage switchgear assembly as claimed in claim 17, **characterized in that** the two supporting elements (26) carrying the distribution bus bars (6a - 6d) are of the same type.

19. Low-voltage switchgear assembly as claimed in at least one of the above-mentioned claims, **characterized in that** the bar channel system (8) is held by one or two insertable fixing means (30) for every supporting element (26) carrying the distribution bus bars (6a - 6d) or, correspondingly, for every pair of supporting elements (26) carrying the distribution bus bars (6a - 6d).

20. Low-voltage switchgear assembly as claimed in at least one of the above-mentioned claims, **characterized in that** bolts, rivets, snap connections, or similar devices may be used as fixing means (30).

21. Low-voltage switchgear assembly as claimed in at least one of the above-mentioned claims, **characterized in that** a PE bar (46) is fixed at one front side of the buldhead wall (28).

22. Low-voltage switchgear assembly as claimed in claim 21, **characterized in that** the PE bar (46) has an L-shaped design.

23. Low-voltage switchgear assembly as claimed in at least one of the above-mentioned claims, **characterized in that** the bar channel system (8) is fixed to the casing (14) with the help of at least two transverse supports (10).

## Revendications

1. Installation de distribution électrique à basse tension pour la fourniture et/ou la répartition de courant électrique, à barres collectrices disposées dans un boîtier (14) en forme d'armoire, auxquelles est relié au moins un balai conducteur pourvu d'au moins un appareil de coupure (17) disposé sur un élément embrochable (16) amovible, où les barres collectrices présentent des barres de distribution (6a - 6d) disposées dans un bloc de canalisation (8) où elles sont maintenues au moyen d'éléments de support (26), dont le raccordement électrique aux appareils de coupure (17) disposés sur un élément embrochable (16) est enfichable, et où le bloc de canalisation (8) présente une canalisation (24) entourant les barres de distributions (6a - 6d) sur trois côtés (24) et une cloison de séparation (28) maintenue contre la canalisation (24) pour la couverture des barres de distribution (6a - 6d), une ouverture (50) au moins étant prévue dans ladite cloison de séparation pour le passage des pièces de contact d'un connecteur de courant de charge, **caractérisée en ce que** la canalisation (24), la cloison de séparation (28) et les éléments de support (26) disposés entre ces demières et fixant les barres de distribution (6a - 6d) présentent des perçages alignés, de sorte que le bloc de canalisation (8) est maintenu au moyen d'un certain nombre de pièces de fixation (30) passant au travers de la canalisation (24), de la cloison de séparation (28) et des éléments de support (26).

2. Installation de distribution électrique à basse tension selon revendication 1, **caractérisée en ce que** des éléments de maintien (36, 38) sont montés sur la canalisation (24), et présentent des moyens pour le logement des éléments embrochables (16).

3. Installation de distribution électrique à basse tension selon l'une des revendications précédentes au moins, **caractérisée en ce que** la canalisation (24) est formée avec une section en U, en C ou en auge, ladite canalisation (24) présentant une paroi de fond (22) et deux parois latérales (32, 34) essentiellement parallèles.

4. Installation de distribution électrique à basse tension selon l'une des revendications précédentes au moins, **caractérisée en ce qu'**au moins une des parois latérales (32, 34) de la canalisation (24) et un élément de support (36, 38) sont exécutés comme une pièce unique.

5. Installation de distribution électrique à basse tension selon l'une des revendications précédentes au moins, **caractérisée en ce que** la canalisation (24) et/ou l'élément de support (36, 38) présentent sur un bord longitudinal libre une plaque de connexion (40, 42) formée pratiquement en équerre.

6. Installation de distribution électrique à basse tension selon revendication 5, **caractérisée en ce que** la plaque de connexion (40, 42) présente des perçages (44) pour le logement de pièces de fixation.

7. Installation de distribution électrique à basse tension selon l'une des revendications précédentes au moins, **caractérisée en ce que** la canalisation (24) et les éléments de support (36, 38) sont exécutés comme une pièce unique.

8. Installation de distribution électrique à basse tension selon l'une des revendications précédentes au moins, **caractérisée en ce que** la cloison de séparation (28) est exécutée comme une pièce unique.

9. Installation de distribution électrique à basse tension selon l'une des revendications précédentes au moins, **caractérisée en ce que** la cloison de séparation et/ou la canalisation (24) et/ou les éléments de support (36, 38) sont exécutés comme pièces métalliques.

10. Installation de distribution électrique à basse tension selon revendication 9, **caractérisée en ce que** la canalisation (24) et les éléments de support (36, 38) sont exécutés à partir d'une seule tôle métallique pliée à cet effet.

11. Installation de distribution électrique à basse tension selon l'une au moins des revendication 9 à 10, **caractérisée en ce que** la canalisation (24) et/ou les éléments de support (36, 38) et/ou la cloison de séparation (28) sont galvanisés.

12. Installation de distribution électrique à basse tension selon l'une des revendications précédentes au moins, **caractérisée en ce que** l'élément de support (36, 38) de chaque élément embrochable (16) présente au moins deux saillies de guidage (52a - 52c) disposées l'une au-dessus des autres, pour le logement d'une arête de guidage (66, 68) de l'élément embrochable (16).

13. Installation de distribution électrique à basse tension selon revendication 12, **caractérisée en ce que** les saillies de guidage (52a - 52c) disposées l'une au-dessus des autres pour le logement d'une arête de guidage (66, 68) de l'élément embrochable (16), sont décalées.

14. Installation de distribution électrique à basse tension selon l'une au moins des revendication 12 et 13, **caractérisée en ce que** la saillie de guidage (52a - 52c) est formée sur l'élément de support (36, 38) par découpage partiel et par pliage consécutif.

15. Installation de distribution électrique à basse tension selon l'une au moins des revendication 12 à 14, **caractérisée en ce que** la saillie de guidage (52a - 52c) présente une surface triangulaire.

16. Installation de distribution électrique à basse tension selon l'une des revendications précédentes au moins, **caractérisée en ce que** les éléments de support (26) maintiennent les barres de distribution (6a -6d) à intervalle tant du canal (24) que de la cloison de séparation (28).

17. Installation de distribution électrique à basse tension selon l'une des revendications précédentes au moins, **caractérisée en ce que** deux éléments de support (26) enserrent les barres de distribution (6a - 6d) entre eux.

18. Installation de distribution électrique à basse tension selon revendication 17, **caractérisée en ce que** les deux éléments de support (26) enserrant les barres de distribution (6a - 6d) sont de construction identique.

19. Installation de distribution électrique à basse tension selon l'une des revendications précédentes au moins, **caractérisée en ce que** le bloc de canalisation (8) est maintenu par un élément de support (26) supportant les barres de distribution (6a - 6d) et où sont enfichées une ou deux pièces de fixation (30), ou par une paire d'éléments de support (26) supportant les barres de distribution (6a - 6d).

20. Installation de distribution électrique à basse tension selon l'une des revendications précédentes au moins, **caractérisée en ce que** des vis, rivets, fermetures à enclenchement ou similaires peuvent être utilisés comme pièces de fixation (30).

21. Installation de distribution électrique à basse tension selon l'une des revendications précédentes au moins, **caractérisée en ce qu'**une barre PE (46) est appliquée sur la face de devant de la cloison de séparation (28).

22. Installation de distribution électrique à basse tension selon revendication 21, **caractérisée en ce que** la barre PE (46) est formée en L.

23. Installation de distribution électrique à basse tension selon l'une des revendications précédentes au moins, **caractérisée en ce que** le bloc de canalisation (8) est fixé sur le boîtier (14) par deux barrettes transversales (10) au moins.
